# EUROPÄISCHE PATENTSCHRIFT

(11) **EP 2 838 316 B1**
(45) Veröffentlichungstag und Bekanntmachung des Hinweises auf die Patenterteilung: **05.10.2016**
(21) Anmeldenummer: 14175854.0
(22) Anmeldetag: 04.07.2014
(51) Int. Cl.: H05B 6/12

(54) **Induktionsheizeinheit**
Induction heating unit
Unité de chauffage à induction

(30) Priorität: 12.07.2013 ES 201331063
(43) Veröffentlichungstag der Anmeldung: 18.02.2015
(73) Patentinhaber: BSH Hausgeräte GmbH, 81739 München (DE)
(72) Erfinder: Acero Acero, Jesus, 50002 Zaragoza (ES); Aranda Vazquez, Sandra, 50018 Zaragoza (ES); Carretero Chamarro, Claudio, 50003 Zaragoza (ES); Diez Esteban, Cristina, 50017 Zaragoza (ES); Hernandez Blasco, Pablo Jesus, 50410 Cuarte de Huerva (Zaragoza) (ES); Lope Moratilla, Ignacio, 50010 Zaragoza (ES); Moya Albertin, Maria Elena, 50002 Zaragoza (ES)

(56) Entgegenhaltungen:
- DE-A1-102007 037 881
- FR-A1- 2 971 910
- US-A- 4 296 295
- US-A- 4 453 067

## Beschreibung

Die Erfindung geht aus von einer Induktionsheizeinheit nach dem Oberbegriff des Anspruchs 1 . Eine solche Anordnung ist aus US4,296,295 bereits benannt.

Es ist bereits eine Induktionsheizeinheit, insbesondere eine Induktionskochfeldheizeinheit, mit zumindest einer Induktionsheizleitung, die zumindest zu einer Spule gewickelt ist und zumindest einen inneren Spulenabschnitt und zumindest einen äußeren Spulenabschnitt umfasst, vorgeschlagen worden. Hierbei sind die beiden Spulenabschnitte dichtgewickelt und auf einem flachen Spulenträger angeordnet.

Die Aufgabe der Erfindung besteht insbesondere darin, eine gattungsgemäße Vorrichtung mit verbesserten Eigenschaften hinsichtlich einer gleichmäßigen Wärmeverteilung und/oder einer geringen Verlustleistung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Induktionsheizeinheit, mit den Merkmalen vom Anspruch 1.

Es wird vorgeschlagen, dass der innere Spulenabschnitt beabstandet gewickelt und der äußere Spulenabschnitt dichtgewickelt ist. Unter einer "Induktionsheizleitung" soll eine elektrische Leitung verstanden werden, die dazu vorgesehen ist, einen elektrischen Strom zu führen, der dazu vorgesehen ist, in einem geeigneten Heizmittel Induktionseffekte hervorzurufen. Insbesondere ist die Induktionsheizleitung dazu vorgesehen, zumindest in einem Betriebszustand von hochfrequentem Wechselstrom durchflossen zu werden. Insbesondere weist der hochfrequente Wechselstrom eine Frequenz von zumindest 1 kHz, insbesondere zumindest 3 kHz, vorteilhaft zumindest 10 kHz, vorzugsweise zumindest 20 kHz und insbesondere maximal 100 kHz auf. Insbesondere weist der hochfrequente Wechselstrom eine Stromstärke von zumindest 0,5 A, insbesondere zumindest 1 A, vorteilhaft zumindest 3 A und vorzugsweise zumindest 10 A auf. Insbesondere ist die Induktionsheizleitung von einer Litzenleitung, mit vorteilhaft gegeneinander isolierten Einzeladern, gebildet, um eine hohe Effizienz zu erreichen. Vorzugsweise ist die Induktionsheizleitung als Induktivität, insbesondere als Spule, vorteilhaft als Flachspule, ausgebildet. Insbesondere weist die Induktionsheizleitung, insbesondere mit einem gekoppelten Heizmittel, eine Induktivität von zumindest 0,1 µH, insbesondere zumindest 0,3 µH und vorteilhaft zumindest 1 µH auf. Insbesondere weist die Induktionsheizleitung, insbesondere ohne ein gekoppeltes Heizmittel, eine Induktivität von maximal 100 mH, insbesondere maximal 10 mH und vorteilhaft maximal 1 mH auf. Insbesondere ist die Induktionsheizleitung in zumindest einem Betriebszustand dazu vorgesehen, eine durch den hochfrequenten Wechselstrom bereitgestellte Heizleistung von zumindest 100 W, insbesondere zumindest 300 W, vorteilhaft zumindest 1000 W und vorzugsweise zumindest 2000 W in ein magnetisches Wechselfeld zu wandeln. Insbesondere ist das magnetische Wechselfeld wiederum dazu vorgesehen, in einem Heizmittel, insbesondere einem Gargeschirr, vorteilhaft einem Gargeschirrboden, durch Wirbelstromeffekte und/oder Ummagnetisierungseffekte in Wärme umgewandelt zu werden. Insbesondere ist die Induktionsheizleitung aus Kupfer und/oder Aluminium ausgebildet. Alternativ sind weitere, einem Fachmann als sinnvoll erscheinende Materialien denkbar. Insbesondere umfasst die Induktionsheizeinheit zumindest einen Spulenträger, der dazu vorgesehen ist, zumindest in montiertem Zustand die Induktionsheizleitung zu tragen. Insbesondere weist der Spulenträger zumindest ein Spulenzentrum auf, um das die Induktionsheizleitung zumindest in montiertem Zustand zu einer Spule gewickelt ist. Unter einer "Spule" ein induktives Bauelement mit zumindest einer insbesondere bestimmten Induktivität verstanden werden. Insbesondere ist die Spule als Flachspule ausgebildet. Insbesondere ist die Spule zumindest im Wesentlichen in Form einer Kreisscheibe, alternativ in Form eines Ovals oder eines Rechtecks, ausgebildet. Insbesondere weist die Spule zumindest fünf, insbesondere zumindest zehn, vorteilhaft zumindest fünfzehn und bevorzugt zumindest zwanzig Windungen der Induktionsheizleitung auf. Insbesondere sind Windungen zumindest eines Spulenabschnitts in einer Ebene angeordnet. Alternativ ist es denkbar, dass Windungen zumindest eines Spulenabschnitts in mehreren Ebenen angeordnet sind. Vorteilhaft weist ein Spulenabschnitt eine Anzahl von zumindest drei, insbesondere zumindest fünf, vorteilhaft zumindest zehn Windungen auf. Erfindungsgemäss sind der innere
Spulenabschnitt und der äußere Spulenabschnitt durch einen Übergangsbereich, der insbesondere eine Breite von zumindest 0,5 cm, insbesondere zumindest 1 cm, vorteilhaft zumindest 2 cm, aufweist, voneinander getrennt. Insbesondere weist der Übergangsbereich eine Breite von weniger als 8 cm, insbesondere weniger als 6 cm und vorteilhaft weniger als 5 cm auf. Insbesondere liegt in dem Übergangsbereich vorteilhaft maximal eine, insbesondere maximal eine halbe, vorzugsweise maximal eine viertel Windung der Induktionsheizleitung. Insbesondere ist der äußere Spulenabschnitt von Windungen gebildet, die Windungen des inneren Spulenabschnitts umgeben, insbesondere umschließen. Insbesondere sind Windungen der unterschiedlichen Spulenabschnitte in einer gleichen Ebene angeordnet. Insbesondere weist der innere Spulenabschnitt bezüglich zumindest einer radialen Richtung einen geringeren Abstand zu dem Spulenzentrum auf als der äußere Spulenabschnitt. Insbesondere weist eine äußerste Windung des inneren Spulenabschnitts, die insbesondere bezüglich der radialen Richtung einen maximalen Abstand von dem Spulenzentrum aufweist, einen geringeren Abstand zu dem Spulenzentrum auf als eine innerste Windung des äußeren Spulenabschnitts, die insbesondere bezüglich der radialen Richtung einen minimalen Abstand von dem Spulenzentrum aufweist. Unter einer "Windung" der Induktionsheizleitung soll insbesondere ein Abschnitt der Induktionsheizleitung verstanden werden, der bezüglich zumindest einer Achse, die vorteilhaft einen Mittelpunkt des Spulenträgers schneidet, jeden Winkelteilbereich um die Achse, insbesondere genau einmal, belegt. Insbesondere ist die Achse zumindest im Wesentlichen senkrecht zu dem Spulenträger und/oder zu der Spule, insbesondere einer Spulenhauptfläche, ausgerichtet. Unter einem "Spulenträger" soll eine Einheit verstanden werden, die dazu vorgesehen ist, die Induktionsheizleitung in Form und/oder Position zu halten. Insbesondere ist der Spulenträger von einem isolierenden, vorteilhaft zumindest teilweise flexiblen Material gebildet. Insbesondere ist der Spulenträger zumindest teilweise von einem Kunststoff gebildet. Alternativ und/oder zusätzlich könnte der Spulenträger zumindest teilweise von einer Keramik gebildet sein. Unter einem "Spulenzentrum" soll insbesondere ein Mittelpunkt und/oder ein Schwerpunkt des Spulenträgers verstanden werden. Insbesondere ist die Induktionsheizleitung um das Spulenzentrum gewickelt. Insbesondere ist das Spulenzentrum in montiertem Zustand von den Spulenabschnitten umgeben. Insbesondere umfasst das Spulenzentrum einen Mittelpunkt und/oder einen Schwerpunkt der Induktionsheizeinheit. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Geraden und/oder Ebene bei einer Projektion auf zumindest eine Projektionsebene, in der zumindest die Gerade und/oder die Ebene angeordnet ist, einen Winkel einschließt, der vorzugsweise um weniger als 15°, vorteilhaft um weniger als 10° und insbesondere um weniger als 5° von einem Winkel von 90° abweicht. Unter einem "beabstandet gewickelten Spulenabschnitt" soll ein Abschnitt der Induktionsheizleitung verstanden werden, dessen Windungen, insbesondere dessen aufeinander folgende Windungen, einen Wicklungsabstand zueinander aufweisen, der größer ist als 0,6 mm, insbesondere größer als 1 mm, vorteilhaft größer als 2 mm und vorzugsweise größer als 3 mm. Insbesondere ist der Wicklungsabstand aufeinander folgender Windungen kleiner als 20 mm, insbesondere kleiner als 15 mm, vorteilhaft kleiner als 10 mm und vorzugsweise kleiner als 5 mm. Unter einem "dichtgewickelten Spulenabschnitt" soll insbesondere ein Abschnitt der Induktionsheizleitung verstanden werden, dessen Windungen, insbesondere dessen aufeinanderfolgende Windungen, einen Wicklungsabstand zueinander aufweisen, der kleiner ist als 0,5 mm, insbesondere kleiner ist als 0,3 mm, vorteilhaft kleiner ist als 0,1 mm. Erfindungsgemäss ist zumindest der äussere Spulenabschnitt dichtgewickelt, und wobei aufeinander folgende Windungen des dichtgewickelten Spulenabschnitts aneinander anliegen. Unter einem "Wicklungsabstand" soll insbesondere eine Breite eines Raums zwischen zwei benachbart angeordneten Windungen der Induktionsheizleitung verstanden werden. Insbesondere soll unter einem Wicklungsabstand eine zumindest im Wesentlichen parallel zu der radialen Richtung ausgerichtete Erstreckung zwischen zwei benachbart angeordneten Windungen der Induktionsheizleitung verstanden werden. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Geraden und/oder Ebene einen Winkel einschließt, der vorzugsweise um weniger als 15°, vorteilhaft um weniger als 10° und insbesondere um weniger als 5° von einem Winkel von 0° abweicht. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung wird eine gleichmäßige Wärmeverteilung und/oder eine geringe Verlustleistung erreicht werden. Zudem kann vorteilhaft eine lange Kochzeit mit maximal anforderbarer Heizleistung vor einer Notabschaltung aufgrund einer Überhitzung erreicht werden. Mittels des beabstandet gewickelten inneren Spulenabschnitts kann vorteilhaft eine geringe Temperatur des inneren Spulenabschnitts und/oder eine geringere Temperatur der Induktionsheizeinheit erreicht werden. Dadurch kann vorteilhaft eine geringe Materialanforderung und/oder geringe Material- und/oder Produktionskosten erreicht werden. Ferner kann vorteilhaft eine langlebige Induktionsheizeinheit erreicht werden. Mittels des dichtgewickelten äußeren Spulenabschnitts kann vorteilhaft ein großes Platzangebot für innerhalb des äußeren Spulenabschnitts angeordnete Spulenabschnitte erreicht werden. Zudem kann vorteilhaft selbst bei kleinen Induktionsheizeinheiten ein Übergangsbereich erreicht werden, mittels dem wiederum eine gleichmäßige Wärmeverteilung, eine hohe Effizienz und/oder eine gute Magnetfeldverteilung erreicht werden kann.

Ferner wird vorgeschlagen, dass in dem inneren Spulenabschnitt zumindest 10 %, insbesondere zumindest 15 %, vorteilhaft zumindest 20 %, vorzugsweise zumindest 25 %, einer Gesamtlänge der Induktionsheizleitung angeordnet sind. Insbesondere sind in dem inneren Spulenabschnitt weniger als 70 %, insbesondere weniger als 60 %, vorteilhaft weniger als 50 %, vorzugsweise weniger als 40 %, einer Gesamtlänge der Induktionsheizleitung angeordnet. Unter einer "Gesamtlänge" der Induktionsheizleitung soll insbesondere die Länge der Induktionsheizleitung bei einer Abwicklung der Induktionsheizleitung in einer Ebene verstanden werden. Insbesondere weist die Induktionsheizleitung eine Gesamtlänge von mehr als 2 m, vorteilhaft von mehr als 3 m und insbesondere von mehr als 5 m auf. Insbesondere weist die Induktionsheizleitung eine Gesamtlänge von weniger als 16 m, vorteilhaft von weniger als 15 m und insbesondere von weniger als 13 m auf. Insbesondere weist die Induktionsheizleitung eine Querschnittsfläche von mehr als 0,2 mm², insbesondere von mehr als 0,5 mm² und vorteilhaft von mehr als 1 mm² auf. Insbesondere weist die Induktionsheizleitung eine Querschnittsfläche von weniger als 16 mm², insbesondere von weniger als 15 mm² und vorteilhaft von weniger als 13 mm² auf. Dadurch kann vorteilhaft eine gleichmäßige und/oder homogene Wärmeverteilung der Induktionsheizeinheit erreicht werden. Zudem kann vorteilhaft eine hohe Anzahl an Windungen in dem beabstandet gewickelten inneren Spulenabschnitt angeordnet werden.

Zudem wird vorgeschlagen, dass in dem äußeren Spulenabschnitt zumindest 30 %, insbesondere zumindest 40 %, vorteilhaft zumindest 50 %, vorzugsweise zumindest 55 %, einer Gesamtlänge der Induktionsheizleitung angeordnet sind. Insbesondere sind in dem äußeren Spulenabschnitt weniger als 85 %, vorteilhaft weniger als 75 %, vorzugsweise weniger als 70 %, insbesondere weniger als 60 %, einer Gesamtlänge der Induktionsheizleitung angeordnet. Dadurch kann vorteilhaft ein großes Platzangebot für innerhalb des äußeren Spulenabschnitts angeordnete Spulenabschnitte erreicht werden. Zudem kann vorteilhaft selbst bei kleinen Induktionsheizeinheiten ein Übergangsbereich erreicht werden.

Weiterhin wird vorgeschlagen, dass die Induktionsheizeinheit zumindest einen Spulenträger, der zumindest einen Wicklungsabstand der Induktionsheizleitung definiert, aufweist. Insbesondere definiert der Spulenträger einen Wicklungsabstand in zumindest einem der Spulenabschnitte, insbesondere in beiden Spulenabschnitten. Insbesondere ist der Wicklungsabstand durch eine Form des Spulenträgers definiert, insbesondere festgelegt. Dadurch kann vorteilhaft die Induktionsheizleitung in einfacher Weise präzise zu einer Spule gewickelt werden, wodurch geringe Produktionskosten erreicht werden können. Zudem kann vorteilhaft eine Aufwicklung der Induktionsheizleitung zu einer Spule automatisiert werden, wodurch eine schnelle Herstellung der Induktionsheizeinheit erreicht werden kann.

Ferner wird vorgeschlagen, dass der Spulenträger zumindest eine Führungseinheit zu einer Führung zumindest des inneren Spulenabschnitts der Induktionsheizleitung aufweist. Insbesondere bildet die Führungseinheit zumindest eine Führungsstrecke aus, entlang der die Induktionsheizleitung in dem inneren Spulenabschnitt geführt ist. Insbesondere weist die Führungseinheit zumindest eine zumindest im Wesentlichen kontinuierliche Führungsnut auf, die die Führungsstrecke definiert, insbesondere ausbildet. Unter einer "zumindest im Wesentlichen kontinuierlichen" Führungsnut soll insbesondere eine Führungsnut verstanden werden, die sich über einen Anteil von mehr als 50 %, insbesondere von mehr als 60 %, vorteilhaft von mehr als 70 %, besonders vorteilhaft von mehr als 80 % und vorzugsweise von mehr als 90 % eines beliebigen Teilabschnitts der Induktionsheizleitung zumindest in dem inneren Spulenabschnitt erstreckt, wobei der Teilabschnitt insbesondere eine Länge in einem Bereich zwischen 3 cm und 6 cm aufweist. Unter einer zumindest im Wesentlichen kontinuierlichen "Führungsnut" soll insbesondere ein Teilbereich der Führungseinheit verstanden werden, der in dem beliebigen Teilabschnitt der Induktionsheizleitung bezüglich der radialen Richtung zumindest eine einseitige, insbesondere eine zweiseitige, seitliche Begrenzung der Induktionsheizleitung ausbildet, an der die Induktionsheizleitung anliegt. Insbesondere bildet die zumindest im Wesentlichen kontinuierliche Führungsnut in dem beliebigen Teilabschnitt der Induktionsheizleitung bezüglich der radialen Richtung eine äußere und/oder eine innere seitliche Begrenzung der Induktionsheizleitung aus. Alternativ zu einer durchgehenden Führungseinheit ist eine punktuelle Führungseinheit denkbar, wobei die Induktionsheizleitung polygonartig geführt ist. Dadurch kann vorteilhaft eine definierte Position des inneren Spulenabschnitts erreicht werden. Zudem kann vorteilhaft auf einen fehleranfälligen Produktionsschritt, bei dem eine, auf einer separaten Wickelvorrichtung gewickelte Spule auf einen Spulenträger übertragen wird, verzichtet werden.

Zudem wird vorgeschlagen, dass der Spulenträger zumindest einen Trägerkern aufweist, um den die Induktionsheizleitung gewickelt ist, um den äußeren Spulenabschnitt zu bilden. Alternativ oder zusätzlich zu einer Definition eines Wicklungsabstands in zumindest einem der Spulenabschnitte definiert der Spulenträger einen Abstand zwischen einer äußersten Windung des inneren Spulenabschnitts und einer innersten Windung des äußeren Spulenabschnitts. Unter einem "Trägerkern" soll insbesondere ein Teil des Spulenträgers verstanden werden, der dazu vorgesehen ist, zumindest eine Form einer innersten Windung des äußeren Spulenabschnitts zu beeinflussen. Insbesondere bildet der Trägerkern eine Führungseinheit der innersten Windung des äußeren Spulenabschnitts aus. Insbesondere ist der Trägerkern dazu vorgesehen, einer radialen Kraft, mit der die Windung insbesondere auf den Trägerkern wirkt, entgegenzuwirken. Insbesondere ist der Trägerkern ringförmig ausgebildet. Insbesondere ragt der Trägerkern über eine, insbesondere teilweise unterbrochene Ebene des Spulenträgers, auf der der entsprechende Spulenabschnitt angeordnet ist, um eine Distanz hinaus, die insbesondere maximal 1 mm, vorteilhaft maximal 0,5 mm, von der Dicke der Induktionsheizleitung abweicht. Insbesondere weist der äußere Spulenkern zumindest eine Übergangsöffnung auf, durch die die Induktionsheizleitung bei einem Übergang von einem inneren, insbesondere des Übergangsbereichs und/oder des inneren Spulenabschnitts, zum äußeren Spulenteilbereich geführt ist. Alternativ könnte der Trägerkern von mehreren, insbesondere einer Vielzahl an Teilabschnitten gebildet sein. Dadurch kann vorteilhaft ein einfacher und/oder preiswerter Produktionsprozess erreicht werden. Insbesondere kann eine definierte Position des äußeren Spulenabschnitts erreicht werden.

Weiterhin wird vorgeschlagen, dass eine Anzahl an Windungen des inneren Spulenabschnitts und eine Anzahl an Windungen des äußeren Spulenabschnitts zumindest im Wesentlichen gleich ist. Insbesondere ist ein Verhältnis einer Anzahl an Windungen des inneren Spulenabschnitts Nᵢₙ zu einer Anzahl an Windungen des äußeren Spulenabschnitts Nₒᵤₜ kleiner als 1,9, insbesondere kleiner als 1,75, vorteilhaft kleiner als 1,5 und vorzugsweise kleiner als 1,3. Insbesondere ist das Verhältnis einer Anzahl an Windungen des inneren Spulenabschnitts Nᵢₙ zu einer Anzahl an Windungen des äußeren Spulenabschnitts Nₒᵤₜ größer als 0,3, insbesondere größer als 0,5, vorteilhaft größer als 0,65 und vorzugsweise größer als 0,7. Insbesondere ist bei einer gleichen Anzahl an Windungen des inneren Spulenabschnitts und des äußeren Spulenabschnitts Nᵢₙ = Nₒᵤₜ ein größerer Anteil an der Gesamtlänge der Induktionsheizleitung in dem äußeren Spulenabschnitt angeordnet. Dadurch kann vorteilhaft eine gleichmäßige und/oder homogene Wärmeverteilung erreicht werden. Zudem kann vorteilhaft eine geringe Verlustleistung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Induktionshausgerät mit vier erfindungsgemäßen Induktionsheizeinheiten in einer schematischen Draufsicht,
- Fig. 2: eine der erfindungsgemäßen Induktionsheizeinheiten aus Fig. 1 in einer schematischen Draufsicht und
- Fig. 3: einen Schnitt durch die erfindungsgemäße Induktionsheizeinheit aus Fig. 2 entlang der Linie III-III.

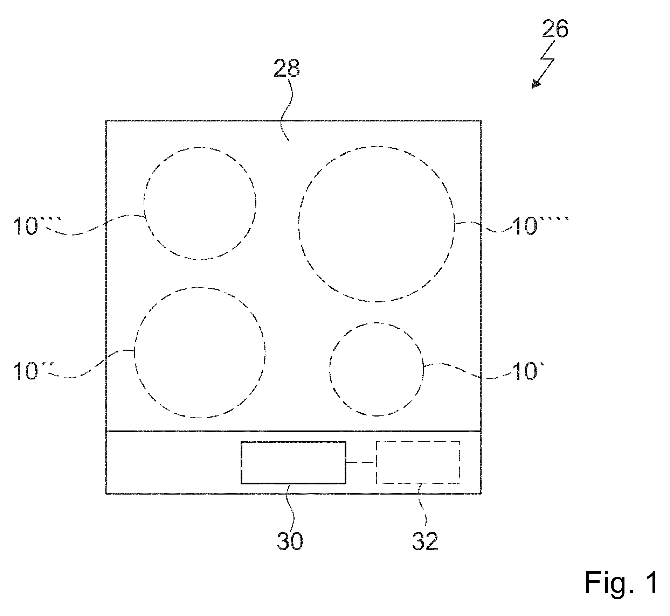

Fig. 1 zeigt ein erfindungsgemäßes Induktionshausgerät 26, das als ein Induktionskochfeld ausgebildet ist. Alternativ zu einer Ausbildung als Induktionskochfeld könnte das Induktionshausgerät 26 als Backofen, Mikrowellengerät und/oder Grill ausgebildet sein. Ebenfalls denkbar sind weitere, einem Fachmann als sinnvoll erscheinende Induktionshausgeräte. Das Induktionshausgerät 26 weist eine Platteneinheit 28 zu einem Aufstellen von Gargeschirren auf. Die Platteneinheit 28 ist als eine Kochfeldplatte ausgebildet. Das Induktionshausgerät 26 weist vier erfindungsgemäße Induktionsheizeinheiten 10 auf, die als Induktionskochfeldheizeinheiten ausgebildet sind. Die Induktionsheizeinheiten 10 sind unterhalb der Platteneinheit 28 angeordnet. Jede der Induktionsheizeinheiten 10 ist dazu vorgesehen, ein auf der Platteneinheit 28 oberhalb der Induktionsheizeinheit 10 aufgestelltes Gargeschirr zu erhitzen. Jede der Induktionsheizeinheiten 10 ist im Wesentlichen kreisförmig ausgebildet und bildet eine eigenständige Heizzone zu einem Erhitzen eines aufgestellten Gargeschirrs aus. Die Induktionsheizeinheiten 10 weisen alle unterschiedliche Durchmesser auf. Eine erste Induktionsheizeinheit 10' weist einen Durchmesser von im Wesentlichen 150 mm auf. Eine zweite Induktionsheizeinheit 10" weist einen Durchmesser von im Wesentlichen 210 mm auf. Eine dritte Induktionsheizeinheit 10'" weist einen Durchmesser von im Wesentlichen 180 mm auf. Eine vierte Induktionsheizeinheit 10'" weist einen Durchmesser von im Wesentlichen 250 mm auf. Alternativ sind Induktionsheizeinheiten mit einem, einem Fachmann als sinnvoll erscheinenden Durchmesser denkbar. Hierbei wären Durchmesser von minimal 120 mm und maximal 320 mm bevorzugt. Zudem könnten eine oder mehrere Induktionsheizeinheiten denselben Durchmesser aufweisen. Das Induktionshausgerät 26 weist in einem in eingebautem Zustand einem Bediener zuweisenden Bereich eine Bedieneinheit 30 zu einer Eingabe von Betriebsparametern auf. Beispielsweise sind die Betriebsparameter als Auswahl und/oder Veränderung einer Heizzone und/oder als eine Einstellung einer Heizleistung und/oder Heizleistungsdichte einer Heizzone ausgebildet. Weiterhin weist das Induktionshausgerät 26 eine Steuereinheit 32 auf, die dazu vorgesehen ist, in Abhängigkeit der mittels der Bedieneinheit 30 eingegebenen Betriebsparameter Aktionen auszuführen und/oder Einstellungen zu verändern.

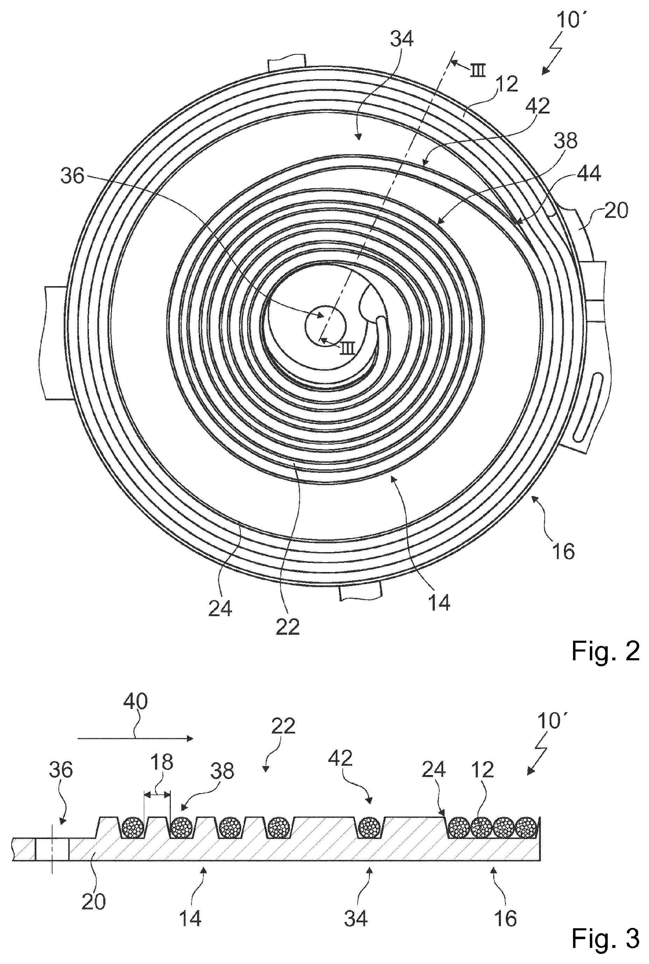

Fig. 2 zeigt die erste Induktionsheizeinheit 10' in einer Draufsicht. Die erste Induktionsheizeinheit 10' umfasst eine Induktionsheizleitung 12, die zu einer Spule gewickelt ist. Die Induktionsheizleitung 12 ist als eine Flachspule auf einen Spulenträger 20 gewickelt. Der Spulenträger 20 umfasst ein Spulenzentrum 36, ausgehend von welchem die Induktionsheizleitung 12 in einer radialen Richtung 40 zu einer Spule gewickelt ist. Die Induktionsheizleitung 12 umfasst einen inneren Spulenabschnitt 14 und einen äußeren Spulenabschnitt 16.

Der innere Spulenabschnitt 14 ist beabstandet gewickelt. Zwei einander bezüglich der radialen Richtung 40 benachbarte Windungen des inneren Spulenabschnitts 14 weisen einen bei einer Herstellung festgelegten Abstand 18 auf, der für zwei beliebige einander bezüglich der radialen Richtung 40 benachbarte Windungen des inneren Spulenabschnitts 14 derselbe ist. Alternativ könnte der Abstand 18 zweier einander bezüglich der radialen Richtung benachbarter Windungen des inneren Spulenabschnitts in radialer Richtung zunehmen und/oder abnehmen. Der Abstand 18 zweier benachbarter Windungen des beabstandet gewickelten inneren Spulenabschnitts 14 beträgt im Wesentlichen 3 mm. Bei Betrachtung eines Schnitts entlang der radialen Richtung 40 folgt auf eine erste Windung des inneren Spulenabschnitts 14 ein Abstand 18, anschließend eine weitere Windung, anschließend erneut ein Abstand 18, gefolgt von einer weiteren Windung, woraufhin erneut ein Abstand 18 und eine weitere Windung folgen. In dieser alternierenden Weise sind alle Windungen des inneren Spulenabschnitts 14 angeordnet (vgl. Fig. 3).

Der äußere Spulenabschnitt 16 ist dichtgewickelt. Zwei einander bezüglich der radialen Richtung 40 benachbarte Windungen des äußeren Spulenabschnitts 16 sind in einem direkten Kontakt miteinander angeordnet. Eine bezüglich der radialen Richtung 40 von dem Spulenzentrum 36 wegweisende Seite einer ersten Windung des äußeren Spulenabschnitts 16 ist in direktem Kontakt mit einer dem Spulenzentrum 36 zuweisenden Seite einer der ersten Windung benachbarten zweiten Windung des äußeren Spulenabschnitts 16 angeordnet. Bei Betrachtung eines Schnitts entlang der radialen Richtung 40 folgt auf eine erste Windung des äußeren Spulenabschnitts 16 eine weitere Windung, gefolgt von einer weiteren Windung und noch einer weiteren Windung, die allesamt in direktem Kontakt angeordnet sind. In dieser Weise sind alle Windungen des äußeren Spulenabschnitts 16 angeordnet (vgl. Fig. 3).

Der innere Spulenabschnitt 14 ist bezüglich der radialen Richtung 40 von dem äußeren Spulenabschnitt 16 umgeben. Beispielsweise ist denkbar, dass zwischen dem inneren Spulenabschnitt und dem äußeren Spulenabschnitt ein weiterer Spulenabschnitt angeordnet ist, wobei der weitere Spulenabschnitt dichtgewickelt und/oder beabstandet gewickelt sein könnte. Hierbei könnte für den Fall von drei Spulenabschnitten die Induktionsheizleitung bezüglich der radialen Richtung einen beabstandet gewickelten Spulenabschnitt, einen weiteren beabstandet gewickelten Spulenabschnitt und einen dichtgewickelten Spulenabschnitt aufweisen. Zudem könnte die Induktionsheizleitung bezüglich der radialen Richtung einen beabstandet gewickeltem Spulenabschnitt, einen dichtgewickelten Spulenabschnitt und einen weiteren dichtgewickelten Spulenabschnitt aufweisen. Alternativ ist denkbar, dass der innere Spulenabschnitt und der äußere Spulenabschnitt direkt benachbart angeordnet sind. Hierbei könnte die Induktionsheizleitung einen weiteren Spulenabschnitt aufweisen, der bezüglich der radialen Richtung auf einer dem Spulenzentrum zuweisenden Seite der beiden Spulenabschnitte und/oder auf einer von dem Spulenzentrum wegweisenden Seite der beiden Spulenabschnitte angeordnet sein könnte. Hierbei könnte für den Fall von drei Spulenabschnitten die Induktionsheizleitung bezüglich der radialen Richtung einen beabstandet gewickelten Spulenabschnitt, einen dichtgewickelten Spulenabschnitt und einen weiteren beabstandet gewickelten Spulenabschnitt aufweisen. Zudem könnte die Induktionsheizleitung bezüglich der radialen Richtung einen dichtgewickelten Spulenabschnitt, einen beabstandet gewickelten Spulenabschnitt und einen weiteren dichtgewickelten Spulenabschnitt aufweisen.

Die Induktionsheizleitung 12 weist einen Übergangsbereich 34 auf, durch den der innere Spulenabschnitt 14 und der äußere Spulenabschnitt 16 getrennt sind. Der Übergangsbereich 34 weist eine viertel Windung auf. Somit erstreckt sich der Übergangsbereich 34 bezüglich des Spulenzentrums 36 über einen Winkelabschnitt von im Wesentlichen 90°. Alternativ könnte der Übergangsbereich eine, einem Fachmann als sinnvoll erscheinende Erstreckung der Windung aufweisen.

Eine Anzahl an Windungen des inneren Spulenabschnitts 14 und eine Anzahl an Windungen des äußeren Spulenabschnitts 16 ist im Wesentlichen gleich. Der innere Spulenabschnitt 14 und der äußere Spulenabschnitt 16 weisen jeweils vier Windungen auf. Alternativ könnte der innere Spulenabschnitt und/oder der äußere Spulenabschnitt eine, einem Fachmann als sinnvoll erscheinende Anzahl an Windungen aufweisen. Aufgrund eines größeren Radius des äußeren Spulenabschnitts 16 im Vergleich zu dem inneren Spulenabschnitt 14 ist bei einer gleichen Anzahl an Windungen ein größerer Anteil einer Gesamtlänge der Induktionsheizleitung 12 in dem äußeren Spulenabschnitt 16 angeordnet. In dem inneren Spulenabschnitt 14 sind im Wesentlichen 39 % der Gesamtlänge der Induktionsheizleitung 12 angeordnet. In dem äußeren Spulenabschnitt 16 sind im Wesentlichen 59 % der Gesamtlänge der Induktionsheizleitung 12 angeordnet. Ein Anteil von im Wesentlichen 2 % der Gesamtlänge der Induktionsheizleitung 12 ist in dem Übergangsbereich 34 angeordnet. Alternativ sind weitere, einem Fachmann als sinnvoll erscheinende Aufteilungen der Gesamtlänge der Induktionsheizleitung in die Spulenabschnitte denkbar.

Die erste Induktionsheizeinheit 10' weist den Spulenträger 20 auf, der einen Wicklungsabstand der Induktionsheizleitung 12 definiert (vgl. Fig. 2 und Fig. 3). Der Spulenträger 20 ist als ein einstückiges Bauteil ausgebildet. Alternativ ist denkbar, dass der Spulenträger zweiteilig und/oder mehrteilig ausgebildet ist. Beispielsweise könnte der Spulenträger aus miteinander verbundenen Streben und/oder Speichen ausgebildet sein. Ebenfalls denkbar ist, dass der innere Spulenabschnitt und der äußere Spulenabschnitt von Teilen des Spulenträgers getragen werden, die erst nach einer Wicklung des inneren Spulenabschnitts miteinander verbunden werden. Der Spulenträger 20 ist als ein massives Bauteil ausgebildet. Alternativ ist denkbar, dass der Spulenträger Hohlräume aufweist, die beispielsweise mittels Streben verbunden sein können, um insbesondere Gewicht zu sparen. Der Spulenträger 20 ist im Wesentlichen aus Kunststoff ausgebildet. Der Spulenträger 20 weist eine Führungseinheit 22 zu einer Führung des inneren Spulenabschnitts 14 der Induktionsheizleitung 12 auf. Zudem ist die Führungseinheit 22 zu einer Führung des Übergangsbereichs 34 der Induktionsheizleitung 12 vorgesehen. Die Führungseinheit 22 definiert den Abstand 18 zweier benachbarter Windungen des inneren Spulenabschnitts 14. Die Führungseinheit 22 erstreckt sich ausgehend von dem Spulenzentrum 36 in der von dem Spulenzentrum 36 wegweisenden radialen Richtung 40. Die Führungseinheit 22 umgibt das Spulenzentrum 36 und definiert eine Führungsstrecke, entlang der die Induktionsheizleitung 12 in dem inneren Spulenabschnitt 14 geführt ist. Die Führungseinheit 22 erstreckt sich ausgehend von dem Spulenzentrum 36 bezüglich der radialen Richtung 40 über im Wesentlichen eine gesamte Breite des inneren Spulenabschnitts 14 bis zu dem Übergangsbereich 34. Die Führungseinheit 22 weist eine im Wesentlichen kontinuierliche Führungsnut 38 auf, die die Führungsstrecke definiert. Ausgehend von dem Spulenzentrum 36 erstreckt sich die Führungsnut 38 im Wesentlichen spiralförmig um das Spulenzentrum 36. Die Führungsnut 38 mündet in den Übergangsbereich 34, in welchem die Führungsnut 38 zur Führung des inneren Spulenabschnitts 14 in eine weitere Führungsnut 42 zur Führung der Induktionsheizleitung 12 in dem Übergangsbereich 34 übergeht. Die weitere Führungsnut 42 definiert eine Führungsstrecke, entlang der die Induktionsheizleitung 12 in dem Übergangsbereich 34 geführt ist. Die weitere Führungsnut 42 ist als eine Nut in einem als Trägerkern 24 bezeichneten Abschnitt des Spulenträgers 20 ausgebildet und bildet eine Übergangsöffnung 44 in dem äußeren Spulenabschnitt 16 aus.

Der Spulenträger 20 weist den Trägerkern 24 auf, um den die Induktionsheizleitung 12 gewickelt ist, um den äußeren Spulenabschnitt 16 zu bilden. Der Trägerkern 24 bildet eine im Wesentlichen kontinuierliche innere Begrenzungsfläche des äußeren Spulenabschnitts 16 aus. Eine dem Spulenzentrum 36 bezüglich der radialen Richtung 40 nächstgelegene Windung des äußeren Spulenabschnitts 16 liegt direkt an der von dem Trägerkern 24 gebildeten Begrenzungsfläche an. Der Trägerkern 24 ist im Wesentlichen konzentrisch um das Spulenzentrum 36 angeordnet.

In einem Verfahren zur Herstellung der ersten Induktionsheizeinheit 10' wird ausgehend von dem Spulenzentrum 36 die Induktionsheizleitung 12 auf den Spulenträger 20 zu einer Spule gewickelt. Die Induktionsheizleitung 12 wird in dem inneren Spulenabschnitt 14 in die Führungsnut 38 gelegt. Anschließend wird die Induktionsheizleitung 12 in die weitere Führungsnut 42 gelegt, durch welche die Induktionsheizleitung 12 über die Übergangsöffnung 44 in den äußeren Spulenabschnitt 16 mündet. Somit wird die Induktionsheizleitung 12 in einem durchgängigen, automatisierten Verfahren zu einer Spule gewickelt. Hierzu wird lediglich ein kontinuierlicher Wicklungsschritt ausgeführt. Zu einer Fixierung der Induktionsheizleitung 12 in dem inneren Spulenabschnitt 14 wird der Spulenträger 20 erhitzt. Dadurch schmilzt der Spulenträger 20 in dem inneren Spulenabschnitt 14 auf und hält die Induktionsheizleitung 12 fest in Position. In dem äußeren Spulenabschnitt 16 wird zu einer Fixierung der Induktionsheizleitung 12 ein Haftungsmittel, beispielsweise Silikon, verwendet. Alternativ ist denkbar, dass in dem inneren Spulenabschnitt und in dem äußeren Spulenabschnitt zu einer Fixierung der Induktionsheizleitung ein Haftungsmittel, beispielsweise Silikon, verwendet wird.

Die Beschreibung der ersten Induktionsheizeinheit 10' gilt in entsprechender Weise auch für die zweite, die dritte und die vierte Induktionsheizeinheit 10", 10"', 10"", wobei sich die zweite, die dritte und/oder die vierte Induktionsheizeinheit in einer Anzahl an Windungen eines inneren und/oder eines äußeren Spulenabschnitts von der ersten Induktionsheizeinheit unterscheiden können. Zudem können sich die zweite, die dritte und/oder die vierte Induktionsheizeinheit in einer Ausgestaltung eines Übergangsbereichs zwischen einem inneren Spulenabschnitt und einem äußeren Spulenabschnitt, insbesondere einer Größe und/oder einer Erstreckung einer Windung, von der ersten Induktionsheizeinheit unterscheiden.

### Bezugszeichen

- 10: Induktionsheizeinheit
- 12: Induktionsheizleitung
- 14: Innerer Spulenabschnitt
- 16: Äußerer Spulenabschnitt
- 18: Abstand
- 20: Spulenträger
- 22: Führungseinheit
- 24: Trägerkern
- 26: Induktionshausgerät
- 28: Platteneinheit
- 30: Bedieneinheit
- 32: Steuereinheit
- 34: Übergangsbereich
- 36: Spulenzentrum
- 38: Führungsnut
- 40: Radiale Richtung
- 42: Weitere Führungsnut
- 44: Übergangsöffnung

## Patentansprüche

1. Induktionsheizeinheit, mit zumindest einer Induktionsheizleitung (12), die zumindest zu einer Spule gewickelt ist und zumindest einen inneren Spulenabschnitt (14) und zumindest einen äußeren Spulenabschnitt (16) umfasst, wobei der innere Spulenabschnitt (14) beabstandet gewickelt und der äußere Spulenabschnitt (16) dichtgewickelt ist, und wobei aufeinander folgende Windungen des dichtgewickelten Spulenabschnitts (16) aneinander anliegen, **dadurch gekennzeichnet, dass** der innere Spulenabschnitt (14) und der äußere Spulenabschnitt (16) durch einen Übergangsbereich voneinander getrennt sind, der eine Breite von zumindest 0,5 cm aufweist.

2. Induktionsheizeinheit nach Anspruch 1, **dadurch gekennzeichnet, dass** ein Abstand (18) zweier benachbarter Windungen des beabstandet gewickelten inneren Spulenabschnitts (14) zumindest 0,6 mm beträgt.

3. Induktionsheizeinheit nach einem der vorhergehenden Ansprüche, **dadurch gekennzeichnet, dass** in dem inneren Spulenabschnitt (14) zumindest 10 % einer Gesamtlänge der Induktionsheizleitung (12) angeordnet sind.

4. Induktionsheizeinheit nach einem der vorhergehenden Ansprüche, **dadurch gekennzeichnet, dass** in dem äußeren Spulenabschnitt (16) zumindest 30 % einer Gesamtlänge der Induktionsheizleitung (12) angeordnet sind.

5. Induktionsheizeinheit nach einem der vorhergehenden Ansprüche, **gekennzeichnet durch** zumindest einen Spulenträger (20), der zumindest einen Wicklungsabstand der Induktionsheizleitung (12) definiert.

6. Induktionsheizeinheit nach Anspruch 5, **dadurch gekennzeichnet, dass** der Spulenträger (20) zumindest eine Führungseinheit (22) zu einer Führung zumindest des inneren Spulenabschnitts (14) der Induktionsheizleitung (12) aufweist.

7. Induktionsheizeinheit zumindest nach Anspruch 5, **dadurch gekennzeichnet, dass** der Spulenträger (20) zumindest einen Trägerkern (24) aufweist, um den die Induktionsheizleitung (12) gewickelt ist, um den äußeren Spulenabschnitt (16) zu bilden.

8. Induktionsheizeinheit nach einem der vorhergehenden Ansprüche, **dadurch gekennzeichnet, dass** eine Anzahl an Windungen des inneren Spulenabschnitts (14) und eine Anzahl an Windungen des äußeren Spulenabschnitts (16) zumindest im Wesentlichen gleich ist.

9. Induktionshausgerät, insbesondere Induktionskochfeld, mit zumindest einer Induktionsheizeinheit (10) nach einem der Ansprüche 1 bis 8.

10. Verfahren zur Herstellung zumindest einer Induktionsheizeinheit (10) nach einem der Ansprüche 1 bis 8, mit zumindest einer Induktionsheizleitung (12), die zumindest zu einer Spule gewickelt wird und zumindest einen inneren Spulenabschnitt (14) und zumindest einen äußeren Spulenabschnitt (16) umfasst, wobei der innere Spulenabschnitt (14) beabstandet gewickelt und der äußere Spulenabschnitt (16) dichtgewickelt wird, und wobei aufeinander folgende Windungen des dichtgewickelten Spulenabschnitts (16) aneinander anliegen, **dadurch gekennzeichnet, dass** der innere Spulenabschnitt (14) und der äußere Spulenabschnitt (16) durch einen Übergangsbereich voneinander getrennt werden, der eine Breite von zumindest 0,5 cm aufweist.

## Claims

1. Induction heating unit having at least one induction heating circuit (12) which is at least wound into a coil and which comprises at least one inner coil section (14) and at least one outer coil section (16), wherein the inner coil section (14) is wound with gaps and the outer coil section (16) is wound tightly, and wherein successive windings of the tightly-wound coil section (16) adjoin each other, **characterised in that** the inner coil section (14) and the outer coil section (16) are separated from each other by a transitional area having a width of at least 0.5 cm.

2. Induction heating unit according to claim 1, **characterised in that** a gap (18) between two adjacent windings of the inner coil section (14) wound with gaps is at least 0.6 mm.

3. Induction heating unit according to one of the preceding claims, **characterised in that** at least 10% of a total length of the induction heating circuit (12) is arranged in the inner coil section (14).

4. Induction heating unit according to one of the preceding claims, **characterised in that** at least 30% of a total length of the induction heating circuit (12) is arranged in the outer coil section (16).

5. Induction heating unit according to one of the preceding claims, **characterised by** at least one coil carrier (20) that defines at least one winding gap of the induction heating circuit (12).

6. Induction heating unit according to claim 5, **characterised in that** the coil carrier (20) has at least one guide unit (22) for guiding at least the inner coil section (14) of the induction heating circuit (12).

7. Induction heating unit according to claim 5, **characterised in that** the coil carrier (20) has at least one carrier core (24) around which the induction heating circuit (12) is wound in order to form the outer coil section (16).

8. Induction heating unit according to one of the preceding claims, **characterised in that** a number of windings of the inner coil section (14) and a number of windings of the outer coil section (16) is at least substantially the same.

9. Induction domestic appliance, in particular induction hob, having at least one induction heating unit (10) according to one of claims 1 to 8.

10. Method for manufacturing at least one induction heating unit (10) according to one of claims 1 to 8, having at least one induction heating circuit (12) which is at least wound into a coil and which comprises at least one inner coil section (14) and at least one outer coil section (16), wherein the inner coil section (14) is wound with gaps and the outer coil section (16) is wound tightly, and wherein successive windings of the tightly-wound coil section (16) adjoin each other, **characterised in that** the inner coil section (14) and the outer coil section (16) are separated from each other by a transitional area having a width of at least 0.5 cm.

## Revendications

1. Unité de chauffe à induction, avec au moins un câble chauffant à induction (12), enroulé au moins en une bobine et qui englobe au moins une section de bobine intérieure (14) et au moins une section de bobine extérieure (16), dans laquelle la section de bobine intérieure (14) est enroulée avec écartement et la section de bobine extérieure (16) est enroulée serrée, et dans laquelle des spires consécutives de la section de bobine enroulée serrée (16) sont contiguës, **caractérisée en ce que** la section de bobine intérieure (14) et la section de bobine extérieure (16) sont séparées l'une de l'autre par une zone de transition qui présente une largeur d'au moins 0,5 cm.

2. Unité de chauffe à induction selon la revendication 1, **caractérisée en ce qu'**un écartement (18) de deux spires voisines de la section de bobine intérieure (14) enroulée avec écartement est d'au moins 0,6 mm.

3. Unité de chauffe à induction selon l'une des revendications précédentes, **caractérisée en ce qu'**au moins 10 % d'une longueur totale du câble chauffant à induction (12) sont disposés dans la section de bobine intérieure (14).

4. Unité de chauffe à induction selon l'une des revendications précédentes, **caractérisée en ce qu'**au moins 30 % d'une longueur totale du câble chauffant à induction (12) sont disposés dans la section de bobine extérieure (16).

5. Unité de chauffe à induction selon l'une des revendications précédentes, **caractérisée par** au moins un support à bobine (20) qui définit au moins un écartement d'enroulement du câble chauffant à induction (12).

6. Unité de chauffe à induction selon la revendication 5, **caractérisée en ce que** le support à bobine (20) présente au moins une unité de guidage (22) pour un guidage d'au moins la section de bobine intérieure (14) du câble chauffant à induction (12).

7. Unité de chauffe à induction au moins selon la revendication 5, **caractérisée en ce que** le support à bobine (20) présente au moins un coeur de support (24) autour duquel le câble chauffant à induction (12) est enroulé afin de constituer la section de bobine extérieure (16).

8. Unité de chauffe à induction selon l'une des revendications précédentes, **caractérisée en ce qu'**un nombre de spires de la section de bobine intérieure (14) et un nombre de spires de la section de bobine extérieure (16) sont au moins essentiellement identiques.

9. Appareil ménager à induction, en particulier champ de cuisson à induction, avec au moins une unité de chauffe à induction (10) selon l'une des revendications 1 à 8.

10. Procédé de fabrication d'au moins une unité de chauffe à induction (10) selon l'une des revendications 1 à 8, avec au moins un câble chauffant à induction (12), enroulé au moins en une bobine et qui englobe au moins une section de bobine intérieure (14) et au moins une section de bobine extérieure (16), dans laquelle la section de bobine intérieure (14) est enroulée avec écartement et la section de bobine extérieure (16) est enroulée serrée, et dans laquelle des spires consécutives de la section de bobine enroulée serrée (16) sont contiguës, **caractérisée en ce que** la section de bobine intérieure (14) et la section de bobine extérieure (16) sont séparées l'une de l'autre par une zone de transition qui présente une largeur d'au moins 0,5 cm.
